# EUROPÄISCHE PATENTANMELDUNG

(11) **EP 2 987 438 A1**
(43) Veröffentlichungstag der Anmeldung: **24.02.2016**
(21) Anmeldenummer: 15180747.6
(22) Anmeldetag: 12.08.2015
(51) Int. Cl.: A47J 43/07

(54) **KÜCHENGERÄT**

(30) Priorität: 13.08.2014 DE 102014111596
(71) Anmelder: Vorwerk & Co. Interholding GmbH, 42275 Wuppertal (DE)
(72) Erfinder: Lang, Torsten, 42657 Solingen (DE); Hackert, Georg, 44869 Bochum (DE); Schomacher, Jutta, 42489 Wülfrath (DE); Kraut-Reinkober, Stefan, 51375 Leverkusen (DE); Sauerwald, Andres, 46238 Bottrop (DE)
(74) Vertreter: Müller, Enno

(57) **Zusammenfassung**

Die Erfindung betrifft eine Küchengerät, mit einem Gefäß (2) und einem Deckel (3) zum Verschließen des Gefäßes (2), wobei ein Verriegelungsmechanismus (8) vorgesehen ist, mit dem der Deckel (2) mit dem Gefäß (3) verriegelbar ist, und mit einer Kontrolleinheit (4), mit der die Lage des Deckels (2) berührungslos bestimmbar ist, wobei der Deckel (2) wenigstens eine Identifizierungseinrichtung (7) aufweist und die Kontrolleinheit (4) mit wenigstens einer Empfangseinheit (6) versehen ist, so dass ein von der Identifizierungseinrichtung (7) ausgehendes Signal von der Empfangseinheit (6) empfangbar ist. Erfindungsgemäß ist vorgesehen, dass die Anzahl der Identifizierungseinrichtungen (7) und die Anzahl der Empfangseinheiten (6) derart gewählt ist, dass insgesamt drei verschiede Paarungen einer Identifizierungseinrichtung (7) mit einer Empfangseinheit (6) zur Verfügung stehen. Damit wird ein derartiges Küchengerät angegeben, bei dem auf universelle Weise ein Verriegeln nur bei vorschriftsmäßiger Positionierung des Deckels (3) auf dem Gefäß (2) ermöglicht ist.

## Beschreibung

Die Erfindung betrifft ein Küchengerät, mit einem Gefäß und einem Deckel zum Verschließen des Gefäßes, wobei ein Verriegelungsmechanismus vorgesehen ist, mit dem der Deckel mit dem Gefäß verriegelbar ist, und mit einer Kontrolleinheit, mit der die Lage des Deckels berührungslos bestimmbar ist, wobei der Deckel wenigstens eine Identifizierungseinrichtung aufweist und die Kontrolleinheit mit wenigstens einer Empfangseinheit versehen ist, so dass ein von der Identifizierungseinrichtung ausgehendes Signal von der Empfangseinheit empfangbar ist.

Derartige Küchengeräte, die ein Gefäß und einen Deckel zum Verschließen des Gefäßes aufweisen, sind aus der Praxis gut bekannt. Exemplarisch sei auf Dampfkochtöpfe und auf multifunktionale Küchenmaschinen hingewiesen. Letztere sind in der Regel mit einem derartigen Gefäß versehen, das die Aufnahme von Nahrungsmitteln ermöglicht, damit diese darin verarbeitet werden können. Eine derartige Verarbeitung der Nahrungsmittel kann z.B. in einem Zerkleinern, Verrühren oder Verkneten bestehen. Darüber hinaus sind derartige Gefäße von Küchenmaschinen bekannt, die zusätzliche Funktionen bereitstellen, wie ein Wiegen der darin enthaltenen Nahrungsmittel und/oder ein Erhitzen.

Häufig ist es gewünscht, dass der Deckel zum Verschließen des Gefäßes mittels eines Verriegelungsmechanismus fest mit dem Gefäß verriegelt werden kann, um ein ungewolltes Austreten der in dem Gefäß enthaltenen Nahrungsmittel bei deren Verarbeitung zu vermeiden. Um einen sicheren Betrieb von derartigen Küchengeräten zu gewährleisten, ist es aus der Praxis bekannt, dass z.B. ein elektrisch betriebenes Küchengerät sich nur dann einschalten lässt, wenn mittels eines Sensors erfasst worden ist, dass der Deckel mit dem Gefäß sicher verriegelt ist.

Hinsichtlich der eigentlichen Verriegelung des Deckels mit dem Gefäß ist es aus der DE 101 11 437 A1 bekannt, eine Verriegelung nur dann zuzulassen, wenn der Deckel richtig auf das Gefäß aufgesetzt ist und sich z.B. jedenfalls in geschlossenen Zustand befindet. Dazu kann in einem Scharnier, mit dem der Deckel verschwenkbar an dem Gefäß befestigt ist, ein Näherungssensor vorgesehen sein, mit dem der Zustand des Deckels (offen oder geschlossen) bestimmt werden kann. Nur in geschlossenem Zustand des Deckels kann dann der Deckel mit dem Gefäß mittels Knopfdruck verriegelt werden.

Ist der Deckel jedoch vollständig von dem Gefäß lösbar und an diesem nicht mittels eines Scharniers befestigt, ist es mittels der in der DE 101 11 437 A1 beschriebenen Technik nicht möglich, eine korrekte Verschlussstellung des Deckels zu detektieren. Darüber hinaus ist der Einsatz von Näherungssensoren, die auf dem Induktionsprinzip arbeiten, insofern problematisch, als dass auch durch andere Einrichtungen als dem Deckel der vermeintliche Umstand detektiert werden könnte, dass sich der Deckel in seiner vorschriftsmäßigen Verschlussstellung befindet.

Davon ausgehend ist es die Aufgabe der Erfindung, ein derartiges Küchengerät anzugeben, bei dem auf universelle Weise ein Verriegeln nur bei vorschriftsmäßiger Positionierung des Deckels auf dem Gefäß ermöglicht wird.

Diese Aufgabe ist durch den Gegenstand des Patentanspruchs 1 gelöst. Bevorzugte Weiterbildungen finden sich in den Unteransprüchen.

Erfindungsgemäß wird damit ein Küchengerät bereitgestellt, mit einem Gefäß und einem Deckel zum Verschließen des Gefäßes, wobei ein Verriegelungsmechanismus vorgesehen ist, mit dem der Deckel mit dem Gefäß verriegelbar ist, und mit einer Kontrolleinheit, mit der die Lage des Deckels berührungslos bestimmbar ist, wobei der Deckel wenigstens eine Identifizierungseinrichtung aufweist und die Kontrolleinheit mit wenigstens einer Empfangseinheit versehen ist, so dass ein von der Identifizierungseinrichtung ausgehendes Signal von der Empfangseinheit empfangbar ist, dadurch gekennzeichnet, dass die Anzahl der Identifizierungseinrichtung und die Anzahl der Empfangseinheiten derart gewählt ist, dass insgesamt drei verschiede Paarungen einer Identifizierungseinrichtung mit einer Empfangseinheit zur Verfügung stehen.

Es ist damit ein wesentlicher Punkt der Erfindung, dass insgesamt wenigstens drei voneinander verschiedene Paare einer Identifizierungseinrichtung auf dem Deckel einerseits und einer Empfangseinheit, vorzugsweise in einem von dem Deckel verschiedenen Teil des Küchengeräts, andererseits vorgesehen sind. Aufgrund dieser drei voneinander verschiedenen Paare lässt sich z.B. auf dem Prinzip der Triangulation oder anderen Verfahren der Bildverarbeitung die Lage des Deckels im Raum, also die Position des Deckels sowie seine Ausrichtung, eindeutig identifizieren.

Grundsätzlich kann es ausreichend sein, wenn das Küchengerät anzeigt, z.B. mittels einer optischen oder akustischen Anzeige, dass der Deckel vorschriftsmäßig auf dem Gefäß angeordnet ist. Gemäß einer bevorzugten Weiterbildung der Erfindung ist jedoch vorgesehen, dass die Kontrolleinheit derart mit dem Verriegelungsmechanismus gekoppelt ist, dass eine Verriegelung des Deckels mit dem Gefäß nur dann möglich ist, wenn mittels der Kontrolleinheit eine vorbestimmte Lage des Deckels erfasst worden ist. Auf diese Weise kann sichergestellt werden, dass nur ein vorschriftsmäßig auf dem Gefäß angeordneter Deckel verriegelt werden kann.

Dabei kann grundsätzlich vorgesehen sein, dass ein Verriegeln nur auf Wunsch des Verwenders erfolgt, z.B. auf einen entsprechenden Knopfdruck hin. Eine bevorzugte Weiterbildung der Erfindung sieht allerdings vor, dass der Verriegelungsmechanismus den Deckel automatisch mit dem Gefäß verriegelt, wenn die vorbestimmte Lage des Deckels auf dem Gefäß erfasst worden ist. Dies erspart einen zusätzlichen Arbeitsgang und ermöglicht es dem Verwender, beide Hände für das Aufsetzen des Deckels auf das Gefäß zu verwenden.

Die Empfangseinheit bzw. die Mehrzahl von Empfangseinheiten können nun unterschiedlich ausgestaltet sein, um berührungslos, nämlich aufgrund eines von der Identifizierungseinrichtung ausgehenden Signals bzw. aufgrund einer Mehrzahl von der Identifizierungseinrichtung ausgehender Signale die Lage des Deckels zu bestimmen. Gemäß einer bevorzugten Weiterbildung der Erfindung ist in diesem Zusammenhang vorgesehen, dass die Empfangseinheit einen optischen Empfänger aufweist. Bei dieser Ausgestaltung der Empfangseinheit als optischer Empfänger ist gemäß einer ersten bevorzugten Alternative eine Photodiode als optischer Empfänger vorgesehen. Gemäß einer zweiten bevorzugten Alternative weist der optische Empfänger eine optische Kamera auf.

Ist als optischer Empfänger eine Photodiode vorgesehen, so ist zusätzlich vorzugsweise wenigstens eine Lichtquelle vorgesehen, mit der Licht auf eine Identifizierungseinrichtung aussendbar ist. Ganz besonders bevorzugt weist eine derartige Lichtquelle einen Laser auf. Mittels dieser Ausgestaltung kann Licht sehr exakt auf die Identifizierungseinrichtung gerichtet werden, so dass z.B. über die Erfassung von Licht, das von der Identifizierungseinrichtung reflektiert worden ist, präzise auf die Position der Identifizierungseinrichtung geschlossen werden kann. Das von der Identifizierungseinrichtung ausgehende Signal, das von der Empfangseinheit empfangbar ist, ist hier also der an der Identifizierungseinrichtung reflektierte Anteil des Lichtes.

In diesem Zusammenhang ist vorzugsweise vorgesehen, dass die Identifizierungseinrichtung mit wenigstens einer Reflexionsstruktur versehen ist, mittels derer auf die Reflexionsstruktur einfallendes Licht an eine der Empfangseinheiten zurück reflektierbar ist. Derartige Reflexionsstrukturen sind vorzugsweise durch eine Hoch-/Tiefstruktur gebildet und dabei ganz besonders bevorzugt durch prismenförmige oder kegelförmige Erhebungen oder Vertiefungen in der Oberfläche des Deckels.

Mit den zuvor beschriebenen bevorzugten Ausgestaltungen der Erfindung wird insgesamt eine Konstruktion ermöglicht, bei der mittels Triangulation, nämlich über wenigstens drei verschiedene Paare einer Identifizierungseinrichtung auf dem Deckel und einer Empfangseinheit in einem vorzugsweise von dem Deckel verschiedenen Teil des Küchengeräts die Position von drei voneinander verschiedenen Stellen des Deckels im Raum ermittelt werden kann, so dass insgesamt die Lage des Deckels eindeutig bestimmbar ist, also die Position des Deckels im Raum sowie seine dortige Ausrichtung. Dies ermöglicht es insgesamt, die Lage des Deckels genau zu erfassen und damit auch eindeutig feststellen zu können, wann der Deckel vorschriftsmäßig auf dem Gefäß angeordnet ist, um das Gefäß dann verriegeln zu können.

Grundsätzlich wäre es dafür z.B. möglich, zwei Identifizierungseinrichtungen und zwei Empfangseinheit bereitzustellen, da auf diese Weise insgesamt vier verschiedene Paarungen einer Identifizierungseinrichtung und einer Empfangseinheit zur Verfügung stehen; erfindungsgemäß benötigt werden drei verschiedene Paarungen einer Identifizierungseinrichtung und einer Empfangseinheit. Vorzugsweise sind jedoch drei verschiedene Identifizierungseinrichtungen vorgesehen, die mit einer einzigen Empfangseinheit in Wechselwirkung stehen oder eine einzige Identifizierungseinrichtung, die mit drei verschiedenen Empfangseinheiten in Wechselwirkung steht.

Bei der Verwendung einer optischen Kamera als optischen Empfänger erfolgt zur Bestimmung der Lage des Deckels keine Triangulation im strengen Sinne. Vielmehr erfolgt ein Abgleich des mit der optischen Kamera aufgenommenen Bildes mit einem Referenzbild, das den "Sollwert" für einen vorschriftsmäßig aufgesetzten Deckel darstellt. Allerdings ist es bei der Verwendung einer optischen Kamera als optischen Empfänger natürlich erforderlich, dass der Deckel mit wenigstens drei voneinander unterscheidbaren Stellen versehen ist, die damit als Identifizierungseinrichtungen wirken können, damit eine unterschiedliche Position bzw. Orientierung des Deckels optisch überhaupt erfassbar ist.

Im Ergebnis bedeutet dies, dass der Deckel vorzugsweise wenigstens drei optisch erfassbare Strukturen, wie Farbmarkierungen oder geometrische Markierungen bzw. Formgebungen aufweist, die voneinander verschieden sind und die damit einen entsprechenden Vergleich mit einem vorgegebenen Bild als "Sollwert" ermöglichen. Ganz besonders bevorzugt ist in diesem Zusammenhang, dass die drei Identifizierungseinrichtungen bei der Erfassung mittels optischer Kamera durch einen Schriftzug gebildet werden. Ein derartiger Schriftzug weist geometrisch wenigstens drei voneinander verschiedene Stellen auf, die insofern als Identifizierungseinrichtungen zur Erfassung der Lage des Deckels dienen können. In diesem Zusammenhang ist natürlich klar, dass bei der Erfassung der Lage des Deckels mit einer optischen Kamera grundsätzlich keine separate Lichtquelle erforderlich ist. In der Regel wird das Umgebungslicht genügen, das bei der Arbeit mit dem Küchengerät regelmäßig vorliegt. Das von der Identifizierungseinrichtung ausgehende Signal ist dann dabei der diffus reflektierte Anteil des Umgebungslichtes, der letztlich für die Sichtbarkeit des Deckels verantwortlich ist.

Gemäß einer anderen bevorzugten Weiterbildung der Erfindung ist vorgesehen, dass die Identifizierungseinrichtung einen wenigstens teilweise um den Umfang des Deckels umlaufenden, optisch transparenten Ring aufweist. Dabei ist dieser optisch transparente Ring vorzugsweise derart ausgestaltet, dass seitlich einfallendes, vorzugsweise radial einfallendes, Licht umgelenkt wird. Ist nun der optisch transparente Ring derart ausgebildet, dass der Grad der Umlenkung des Lichtes, also der Winkel, in dem das Licht umgelenkt wird, wenigstens an drei Stellen in unterschiedlicher Weise abhängig von der Lage des Deckels ist, wird es auf diese Weise wieder ermöglicht, die Lage des Deckels zu ermitteln.

Alternativ zu einer Ausbildung des transparenten Ringes derart, dass einfallendes Licht in vorbestimmter Weise umgelenkt wird, ist gemäß einer bevorzugten Weiterbildung der Erfindung vorgesehen, dass der optisch transparente Ring ein fluoreszierendes Material aufweist, so dass einfallendes Licht in seiner spektralen Zusammensetzung verändert wird. Entsprechend der Grundidee der Erfindung kann auch damit die Lage des Deckels ermittelt werden, nämlich indem die Veränderung der spektralen Zusammensetzung so gewählt wird, dass diese an wenigstens drei Stellen in unterschiedlicher Weise von der Position und Orientierung des Ringes und damit der Lage des Deckels im Raum abhängt.

Schließlich ermöglicht die Erfindung nicht nur ein optisches Erfassen von von dem Deckel herrührenden Signalen zu dessen Lagebestimmung. Gemäß einer bevorzugten Weiterbildung der Erfindung ist nämlich vorgesehen, dass die Empfangseinheit einen Transponder-Reader und die Identifizierungseinrichtung einen Transponder aufweist. Gemäß dieser bevorzugten Weiterbildung der Erfindung ist also vorgesehen, dass in dem Deckel wenigstens ein Transponder integriert ist, der mittels des Transponder-Readers detektierbar ist.

Dabei kann der Transponder grundsätzlich ein aktiver Transponder sein, der mit einer Stromversorgung versehen ist. Gemäß einer bevorzugten Weiterbildung der Erfindung ist der Transponder jedoch ein passiver Transponder, der durch von dem Transponder-Reader ausgehende Signale aktiviert wird. Auf diese Weise wird eine Energiequelle im Deckel bzw. werden Anschlüsse im Deckel zur Verbindung mit einer Energiequelle vermieden.

Während beim Vorsehen nur eines Transponders und nur eines Transponder-Readers mit einer einzigen Antenne lediglich eine binäre Lokalisierung des Transponders möglich ist, also die Bestimmung, ob der Transponder innerhalb des Detektionsbereichs des Transponder-Readers vorhanden ist oder nicht, ermöglicht die Ausgestaltung gemäß dem vorliegend beschriebenen bevorzugten Ausführungsbeispiel der Erfindung die exakte Bestimmung der Lage des Deckels im Raum. Dies wird nämlich dadurch ermöglicht, dass wie schon eingangs beschrieben, wenigstens drei verschiedene Paare eines Transponders einerseits und eines Transponder-Readers andererseits vorgesehen sind. Konkret kann z.B. die Position eines Transponders exakt dadurch erfasst werden, dass drei voneinander verschiedene Empfangseinheiten, also drei unterschiedliche Transponder-Reader bzw. jedenfalls drei voneinander verschiedene Empfangsantennen verwendet werden. Hinsichtlich Details zur örtliche Lokalisation eines Transponders mittels eines Transponder-Readers mit mehreren Antennen wird auf die DE 10 2006 026 495 A1 verwiesen.

Nachfolgend wird die Erfindung unter Bezugnahme auf die Zeichnung im Detail erläutert.

In der Zeichnung zeigen
- Fig. 1: schematisch ein Küchengerät gemäß einem bevorzugten Ausführungsbeispiel der Erfindung und dabei, ebenfalls schematisch, die Erfassung von optischen Signalen, die an auf einem Deckel vorgesehenen Identifizierungseinrichtungen reflektiert werden,
- Fig. 2a, b: verschiedene Strukturen für Identifizierungseinrichtungen gemäß bevorzugter Ausführungsbeispiele der Erfindung,
- Fig. 3a, b: Schnitte durch einen Deckel, der einen um den Umfang des Deckels umlaufenden optisch transparenten Ring aufweist,
- Fig. 4: schematisch ein Küchengerät gemäß einem anderen bevorzugten Ausführungsbeispiel der Erfindung mit einem Transponder im Deckel und einem Transponder-Reader und
- Fig. 5: schematisch ein Küchengerät gemäß einem noch anderen bevorzugten Ausführungsbeispiel der Erfindung mit einer optischen Kamera zur Erfassung der Lage des Deckels.

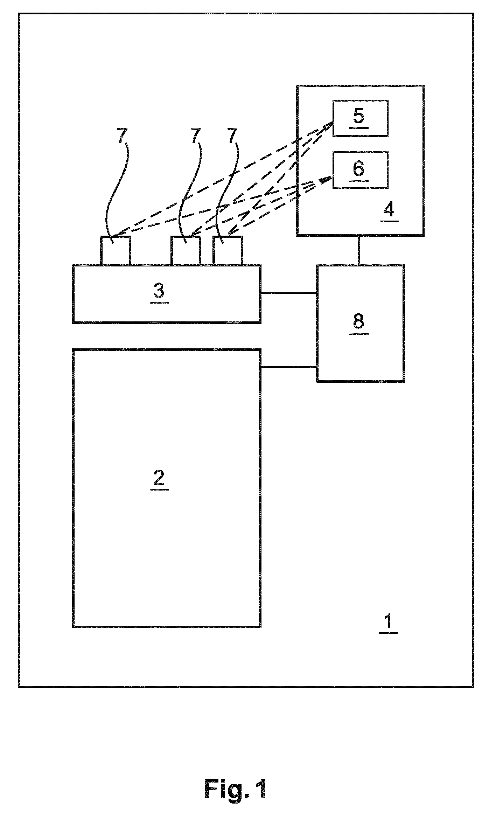

Aus Fig. 1 ist ein Küchengerät 1 gemäß einem bevorzugten Ausführungsbeispiel der Erfindung ersichtlich. Dieses Küchengerät 1 weist ein Gefäß 2 mit einem Deckel 3 auf. Zur Verriegelung des Deckels 3 mit dem Gefäß 2 ist ein Verriegelungsmechanismus 8 vorgesehen.

Um nun die Verriegelung des Deckels 3 mit dem Gefäß 2 nur dann zuzulassen, wenn der Deckel 3 vorschriftsmäßig auf dem Gefäß 2 aufgesetzt ist, ist gemäß dem vorliegend beschriebenen bevorzugten Ausführungsbeispiel der Erfindung Folgendes vorgesehen:
In einem von dem Gefäß 2 und dem Deckel 3 verschiedenen Teil des Küchengeräts 1 sind, als Bestandteile einer Kontrolleinheit 4, eine Lichtquelle 5, nämlich ein Laser, sowie eine Empfangseinheit 6, nämlich ein optischer Empfänger in Form einer Photodiode, angeordnet. Von der Lichtquelle 5 ausgesandtes Licht wird an auf dem Deckel 3 vorgesehenen Identifizierungseinrichtungen 7 reflektiert, so dass das reflektierte Licht, bei vorbestimmter Lage des Deckels 3, in die Empfangseinheit 6 reflektiert wird.

Bei der in Fig. 1 gezeigten Lage des Deckels 3 wird das von der Lichtquelle 5 ausgesandte Licht von allen Identifizierungseinrichtungen 7 zurück in die Empfangseinheit 6 reflektiert; der Deckel 3 befindet sich also in seiner vorschriftsmäßigen Lage, in der er mit dem Verriegelungsmechanismus mit dem Gefäß 2 verriegelt werden darf. Dazu werden die von den Empfangseinheiten 6 erfassten Signale von der Kontrolleinheit 4 ausgewertet, um ein entsprechendes Steuersignal zur Verriegelung an den Verriegelungsmechanismus 8 zu geben.

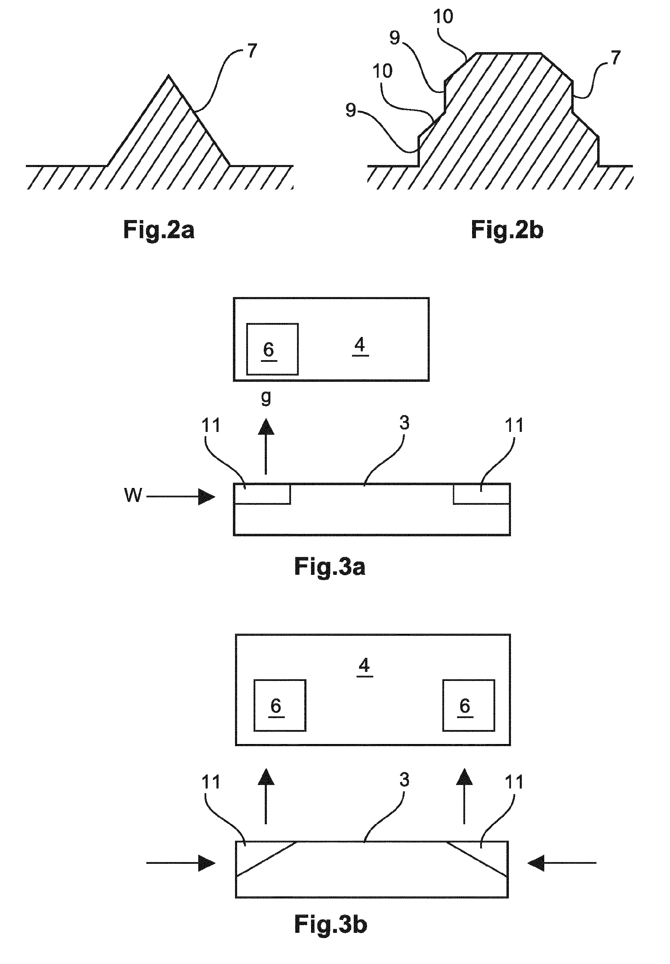

Aus den Fig. 2a und 2b sind Strukturen der Identifizierungseinrichtungen 7 ersichtlich, wie sie vorzugsweise bei dem Küchengerät gemäß dem in Figur 1 gezeigten bevorzugten Ausführungsbeispiel der Erfindung Verwendung finden. Figur 2a zeigt dabei eine einfache Pyramidenform, bei der die Seitenwände der Pyramide als Reflexionsflächen wirken. Je nach Position und Ausrichtung der Reflexionsflächen im Raum wird von der Lichtquelle 5 ausgesandtes Licht unterschiedlich zurück reflektiert.

Die Anordnung der einzelnen Identifizierungseinrichtungen 7 wird dabei derart gewählt, dass nur bei korrekter Ausrichtung des Deckels 3 ein Rückreflex zur Empfangseinheit 6 hin erfolgt, so dass damit die korrekte Lage des Deckels 3 erfassen kann. Im Vergleich mit Fig. 2a zeigt Fig. 2b zeigt eine komplexere Struktur für eine Identifizierungseinrichtung 7, bei der sich senkrechte Flächen 9 mit schrägen Flächen 10 abwechseln. Auch von den in den Fig. 2a und 2b gezeigten Formen und Verläufen der Reflexionsflächen abweichende Formen und Verläufe sind möglich.

Identifizierungseinrichtungen zur Umsetzung des Prinzips der vorliegenden Erfindung können auch dadurch verwirklicht werden, dass der Deckel 3 einen wenigstens teilweise um den Umfang des Deckels 3 umlaufenden, optisch transparenten Ring 11 aufweist. Dies ist in den Fig. 3a und 3b dargestellt, die jeweils einen Schnitt durch einen Deckel 3 mit einem entsprechenden umlaufenden Ring 11 zeigen.

In dem Ausführungsbeispiel gemäß Figur 3a weist der Ring 11 fluoreszierendes Material auf, und zwar derart, dass wenigstens drei voneinander verschiedene Stellen des Ringes 11 ein unterschiedliches Fluoreszenzverhalten zeigen. Auf diese Weise werden ebenfalls drei voneinander verschiedene Identifizierungseinrichtungen verwirklicht, die damit auf die zuvor beschriebene Weise eine Bestimmung der Lage des Deckels 3 im Raum über die Erfassung des Fluoreszenzlichtes erlauben. Schematisch ist dies dargestellt durch den von links einfallenden Pfeil in Figur 3a, der weißes Licht w darstellt, das aufgrund des fluoreszierenden Materials in grünes Licht g umgewandelt wird. Dieses wird mittels einer Empfangseinheit 6 erfasst und in der Kontrolleinheit 4 hinsichtlich der Lage des Deckels 3 weiter ausgewertet.

In Figur 3b ist ein alternatives bevorzugtes Ausführungsbeispiel der Erfindung mit einem umlaufenden Ring 11 gezeigt, bei dem es an verschiedenen Stellen des Ringes 11 zu unterschiedlichen Reflexionen, also zu Reflexionen in unterschiedliche Winkel kommt. Zur Erfassung dieser verschiedenen Reflexionen sind in der Kontrolleinheit 4 verschiedene optische Empfänger 6 angeordnet, so dass auch auf diese Weise wieder die Lage des Rings 11 und damit des Deckels 3 im Raum eindeutig identifiziert werden kann.

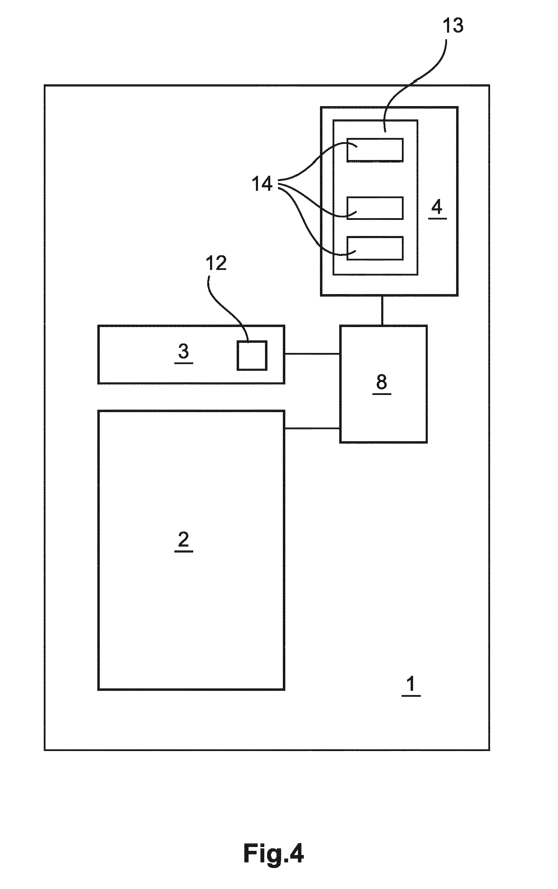

Bei dem schematisch in Figur 4 dargestellten Küchengerät 1 gemäß einem anderen bevorzugten Ausführungsbeispiel der Erfindung ist in den Deckel 3 ein Transponder 12 integriert. Insofern ist hier Bestandteil der Kontrolleinheit 4 ein Transponder-Reader 13, der vorliegend mit drei verschiedenen Antennen 14 versehen ist. Es sei betont, dass diese Antennen 14 nur insofern verschieden sind, als dass sie nicht von unterschiedlicher Art sein müssen, jedoch an unterschiedlichen geometrischen Orten angeordnet sind. Im Gegensatz zum Vorsehen nur einer einzigen Antenne 14 kann damit nicht nur binär erfasst werden, ob der Deckel 3 vorhanden ist oder nicht, sondern auch, wo sich der Transponder 12 genau befindet. Auf diese Weise ist also wieder genau bestimmbar, wie die Lage des Deckels 3 im Raum ist.

Da mittels des Transponders 12 auch Identifizierungsdaten übertragen werden können, ist bei dem vorliegenden bevorzugten Ausführungsbeispiel zusätzlich vorgesehen, dass sich der Deckel 3 gegenüber der Kontrolleinheit 4 auch insofern identifiziert, als dass abgefragt wird, ob es sich um den "richtigen" Deckel 3 handelt, also um den Deckel 3, der zu dem vorliegenden Küchengerät 1 mit dem Gefäß 2 gehört.

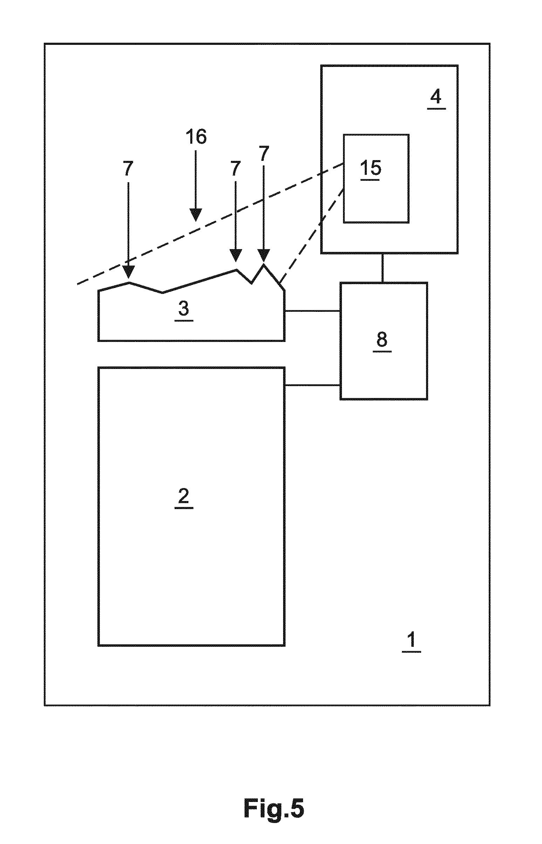

Figur 5 zeigt schließlich ein Küchengerät 1 gemäß einem bevorzugten Ausführungsbeispiel der Erfindung, bei dem zur Erfassung der Lage des Deckels 3 eine optische Kamera 15 vorgesehen ist. Diese ist derart angeordnet, dass ihr optischer Erfassungsbereich 16 im Wesentlichen die gesamte Oberfläche des Deckels 3 umfasst.

Damit über die optische Kamera 15 die Kontrolleinrichtung 4 feststellen kann, wie der Deckel 3 orientiert ist, muss der Deckel 3 mit Strukturen versehen sein, die seine Ausrichtung erkennbar machen. Schließlich ist es zur Detektion der vorschriftsmäßigen Lage des Deckels 3 nicht nur erforderlich, seine Position zu ermitteln, sondern auch, wie er an dieser Position ausgerichtet ist.

Insofern ist Figur 5 schematisch zu entnehmen, dass die Oberfläche des Deckels 3 mit Strukturen, nämlich hier ebenfalls als Identifizierungseinrichtungen 7 bezeichneten Erhebungen, versehen ist, die eine Bestimmung der Ausrichtung erlauben. Können diese drei Identifizierungseinrichtungen 7 in Abgleich mit dem als "Soll" dienenden Referenzbild gebracht werden, liegt die vorschriftsmäßige Lage des Deckels 3 vor, in der dieser mittels des Verriegelungsmechanismus 8 mit dem Gefäß 2 verriegelt werden darf.

### Bezugszeichenliste

- 1: Küchengerät
- 2: Gefäß
- 3: Deckel
- 4: Kontrolleinheit
- 5: Lichtquelle
- 6: optischer Empfänger
- 7: Identifizierungseinrichtungen
- 8: Verriegelungsmechanismus
- 9: senkrechte Flächen
- 10: schräge Flächen
- 11: Ring
- 12: Transponder
- 13: Transponder-Reader
- 14: Antennen
- 15: optische Kamera
- 16: optischer Erfassungsbereich

## Patentansprüche

1. Küchengerät, mit einem Gefäß (2) und einem Deckel (3) zum Verschließen des Gefäßes (2), wobei ein Verriegelungsmechanismus (8) vorgesehen ist, mit dem der Deckel (2) mit dem Gefäß (3) verriegelbar ist, und mit einer Kontrolleinheit (4), mit der die Lage des Deckels (2) berührungslos bestimmbar ist, wobei der Deckel (2) wenigstens eine Identifizierungseinrichtung (7) aufweist und die Kontrolleinheit (4) mit wenigstens einer Empfangseinheit (6) versehen ist, so dass ein von der Identifizierungseinrichtung (7) ausgehendes Signal von der Empfangseinheit (6) empfangbar ist, **dadurch gekennzeichnet, dass** die Anzahl der Identifizierungseinrichtungen (7) und die Anzahl der Empfangseinheiten (6) derart gewählt ist, dass insgesamt drei verschiede Paarungen einer Identifizierungseinrichtung (7) mit einer Empfangseinheit (6) zur Verfügung stehen.

2. Küchengerät nach Anspruch 1, **dadurch gekennzeichnet, dass** die Kontrolleinheit (4) derart mit dem Verriegelungsmechanismus (8) gekoppelt ist, dass eine Verriegelung des Deckels (3) mit dem Gefäß (2) nur dann möglich ist, wenn mittels der Kontrolleinheit (4) eine vorbestimmte Lage des Deckels (3) bestimmt worden ist.

3. Küchengerät nach Anspruch 1 oder 2, **dadurch gekennzeichnet** die Empfangseinheit (6) einen optischen Empfänger aufweist.

4. Küchengerät nach einem der vorhergehenden Ansprüche, **dadurch gekennzeichnet, dass** wenigstens eine Lichtquelle (5) vorgesehen ist, mit der Licht auf eine Identifizierungseinrichtung (7) aussendbar ist.

5. Küchengerät nach einem der vorhergehenden Ansprüche, **dadurch gekennzeichnet, dass** die Identifizierungseinrichtung (7) mit wenigstens einer Reflexionsstruktur versehen ist, mittels derer auf die Reflexionsstruktur einfallendes Licht an eine Empfangseinheit (6) reflektierbar ist.

6. Küchengerät nach einem der vorhergehenden Ansprüche, **dadurch gekennzeichnet, dass** die Identifizierungseinrichtung (7) Hoch-/Tiefstruktur aufweist, die durch prismenförmige oder kegelförmige Erhebungen oder Vertiefungen in der Oberfläche des Deckels (3) gebildet ist.

7. Küchengerät nach einem der Ansprüche 1 bis 5, **dadurch gekennzeichnet, dass** die Identifizierungseinrichtung (7) einen wenigstens teilweise um den Umfang des Deckels (3) umlaufenden, optisch transparenten Ring (11) aufweist.

8. Küchengerät nach Anspruch 7, **dadurch gekennzeichnet, dass** der optisch transparente Ring (11) so ausgestaltet ist, dass seitlich einfallendes, vorzugsweise radial einfallendes, Licht umgelenkt wird.

9. Küchengerät nach Anspruch 7, **dadurch gekennzeichnet, dass** der optisch transparente Ring (11) ein fluoreszierendes Material aufweist, so dass einfallendes Licht in seiner spektralen Zusammensetzung verändert wird.

10. Küchengerät nach Anspruch 1 oder 2, **dadurch gekennzeichnet, dass** die Empfangseinheit einen Transponder-Reader (13) und die Identifizierungseinrichtung (7) einen Transponder (12) aufweist.
